# EUROPEAN PATENT SPECIFICATION

(11) **EP 1 770 738 B1**
(45) Date of publication and mention of the grant of the patent: **15.05.2019**
(21) Application number: 06019875.1
(22) Date of filing: 22.09.2006
(51) Int. Cl.: H01H 47/00, H01H 9/02, H01H 71/02, H02B 1/052, H02B 1/20

(54) **Method and system for controlling the flow of electrical power**
Verfahren und Vorrichtung zur Regelung der Zufuhr elektrischer Leistung
Procédé et système pour le contrôle du flux de puissance électrique

(30) Priority: 30.09.2005 US 241013
(43) Date of publication of application: 04.04.2007
(73) Proprietor: Rockwell Automation Technologies, Inc., Mayfield Heights, OH 44124 (US)
(72) Inventor: Battani, Jeffery John, Waterford, WI 53185 (US)
(74) Representative: Grünecker Patent- und Rechtsanwälte PartG mbB

(56) References cited:
- EP-A- 0 694 938
- EP-A- 0 717 425
- EP-A- 0 779 640
- WO-A-01/27956
- WO-A-2005/101440
- DE-A1- 4 335 965
- DE-A1- 19 748 531
- US-A- 3 278 807

## Description

The present invention relates generally to systems for providing and controlling electrical power delivered to loads. More particularly, the invention relates to so-called "safety relays" and similar devices conventionally provided as separate, non-integrated components.

Systems that distribute electrical power for residential, commercial, and industrial uses can be complex and widely divergent in design and operation. Electrical power generated at a power plant may be processed and distributed via substations, transformers, power lines, and so forth, prior to receipt by the end user. The end user may receive the power over a wide range of voltages, depending on availability, intended use, and other factors. In large commercial and industrial operations, the power may be supplied as three phase ac power (e.g., 208 to 690 volt ac, and higher). Power distribution and control equipment then conditions the power and applies it to loads, such as electric motors and other equipment. In one exemplary approach, collective assemblies of protective devices, control devices, switchgear, controllers, and so forth are located in enclosures, sometimes referred to as "motor control centers" or "MCCs." Though the present techniques are discussed in the context of motor control, the techniques may apply to power management systems in general, such as switchboards, switchgear, panelboards, pull boxes, junction boxes, cabinets, other electrical enclosures, and distribution components.

As most people are aware, electricity, especially at higher power levels, must be treated with care, with particular techniques being dictated by applicable professional and legal "codes". For this reason, there is great interest in developing components, tools, and/or devices to safely channel the flow of electrical power to those places where it is needed, a load, for example. This is especially true in industrial applications, such as providing power to motors, manufacturing equipment, control systems and so forth. Code setting bodies include, for example, the Institute of Electrical and Electronics Engineers (IEEE). Such bodies set standards for equipment and methods, but often leave some latitude as to the particular implementation and design of components and systems that conform to the standards.

Two devices that help to facilitate the management of electrical power are the contactor and the "safety relay". Contactors are electrical devices that can be used to control the flow of electrical power. A typical contactor uses relatively low voltage control power (e.g., 24 volts dc, or 110 volts ac) to open or close contacts that control (i.e., complete a current-carrying path for) a higher voltage power (e.g., 480 volts). When a contactor allows power to flow through it, it is considered to be closed, and when the contactor does not allow power to flow through it, it is considered to be open. Generally, there are two types of contactors: normally open contactors and normally closed contactors. As will be appreciated by those skilled in the art, most such devices can be connected as normally open or normally closed, by properly terminating wiring to particular terminals associated with their movable contacts. A normally open contactor (if functioning properly) is in an open state when it is not energized (i.e., there is no control power being applied). When control power is applied to a normally open contactor, the contactor will energize, and close the switching contacts, which allows power to flow through the contactor. On the other hand, a normally closed contactor (if functioning properly) will be in a closed position when no control power is applied and in an open position when control power is applied to the contactor.

As described above, a contactor facilitates the control of electricity by acting as a voltage control switch. For example, with a normally open contactor, load power (e.g., power for a motor) wired through the contactor may be turned on by applying the control power and turned off by removing control power. However, as most contactors employ physical electromechanical components, in certain circumstances, the physical components within the contactor can become fused in either the open position or the closed position (e.g., by "welding" of the movable and stationary contacts as a resulting of arcing). A contactor that is fused in the open position is unable to turn on; whereas a contactor fused in the closed position is unable to turn off. For a variety of reasons, either condition can result in an inability to operate the machinery as desired.

One technique for mitigating such problems posed by fused contactors is to use so-called "safety relays". Safety relays can monitor a condition, such as whether a contactor is actually in the open position or in the closed position and "relay" that condition information elsewhere in an electrical system. For example, if a safety relay is coupled to a normally open contactor, it can verify that the normally open contactor is open when there is no control power being applied and transmit this information to the power source or remote controller producing or providing the power controlled by the normally open contactor. In this way, safety relays may facilitate enhanced control and monitoring by enabling the operator or a control device to ensure that the contactor is operating properly before applying power to the contactor.

As contactors and safety relays facilitate increased electrical control and monitoring, there is a need for improved systems and techniques for utilizing contactors and safety relays in electrical systems.

EP 0 779 640 A2 refers to a bus compatible amplifier module for electromagnetic switchgear drive arrangements. An electromagnetic or electronic amplifier arrangement is connected by an interface circuit to first and second bus terminals and connected with current supply terminals and driver terminals. The interface may be bidirectional or unidirectional and conveys signals from the bus to a selector, a time delay circuit and a switching relay. The delay circuit has an input for adjustment parameters of the amplifier, and an output for status parameters.

DE 197 48 531 A1 refers to a load feeder with a modular assembly, wherein the load feeder consists of a feeder module and a base holder with integrated line and/or bus sections. The base holder can be extended into a modular support system with a line and bus system by adding and contacting other similarly constructed base holders for accommodating other feeder modules or input/output modules.

US 3 278 807 A refers to a panel assembly with frictionally held bus bars. In particular, this technique relates to circuit breaker panel assemblies for circuit breakers of relatively low amperage capacity such as those used for control of branch lighting and power circuits in the home and commercial buildings.

WO 01/27956 A1 discloses an actuator unit comprising two contactors connected in series and a control unit connected to the two contactors. The two contactors and the control unit are arranged in a housing to constitute a mountable unit.

It is the object of the present invention to provide an improved device and method for controlling the flow of power in an electrical system.

This object is solved by the subject matter of the independent claims.

Preferred embodiments are defined by the dependent claims.

The devices, techniques, and embodiments described herein can be used on single-phase and three-phase applications with little modification. Still further, the devices and techniques can be implemented in a stand-alone embodiment or in a distributed network environment.

The integrated components greatly facilitate proper wiring and configuration of contactors and safety relays that were unattainable in conventional settings. Moreover, the integration of the components allows for factory control of the interoperability of the components, reducing or eliminating the need to field-wire the components, which can prove complex, challenging, time-consuming and expensive when conventional components are provided separately.

These and other features, aspects, and advantages of the present invention will become better understood when the following detailed description is read with reference to the accompanying drawings in which like characters represent like parts throughout the drawings, wherein:
FIG. 1 is a diagrammatical perspective view of an integrated safety starter in accordance with aspects of the present technique;
FIG. 2 is a diagrammatical view of a system employing the integrated safety starter, as illustrated in FIG. 1, in accordance with aspects of the present technique;
FIG. 3 is a diagrammatical view of a system employing a network capable integrated safety starter in accordance with aspect of the present technique; and
FIG. 4 is a block diagram of a networked motor control system employing the network capable integrated safety starter, as illustrated in FIG. 3, in accordance with aspects of the present technique.

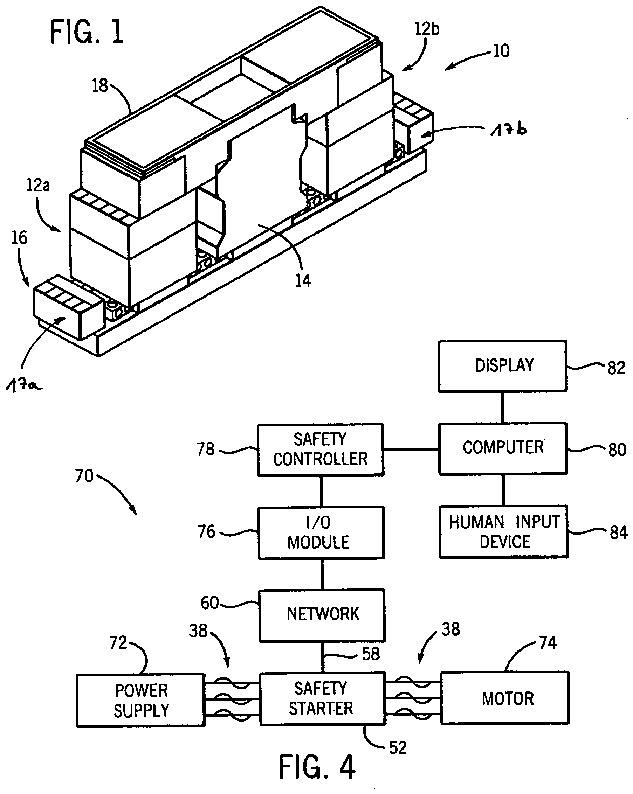

Turning now to the drawings, and referring first to FIG. 1, an integrated safety starter is illustrated diagrammatically and generally designated by a reference numeral 10. The integrated safety starter 10 includes contactors 12a and 12b. The contactors 12a and 12b are electrical devices that can be used to control the flow of power. In one embodiment, the contactors 12a and 12b are 100-C, four pole contactors available commercially from Rockwell Automation of Milwaukee, Wisconsin under the commercial designation 100-C.

As described above, when a contactor allows power to flow through it, it is considered to be closed, and when the contactor does not allow power to flow through it, it is considered to be open. Generally, contactors may be wired as normally open and normally closed. A normally open contactor (if functioning properly) is in an open state when it is not energized (i.e., there is no control power applied to it). When control power is applied to a normally open contactor, the contactor will energize, and close the switch (i.e., physically join movable and stationary contacts), which allows power to flow through the contactor. On the other hand, a normally closed contactor (if functioning properly) will be in a closed position when no control power is applied and in an open position when control power is applied to the contactor. In one embodiment, the contactor 12a is a normally open contactor and the contactor 12b is a normally closed contactor.

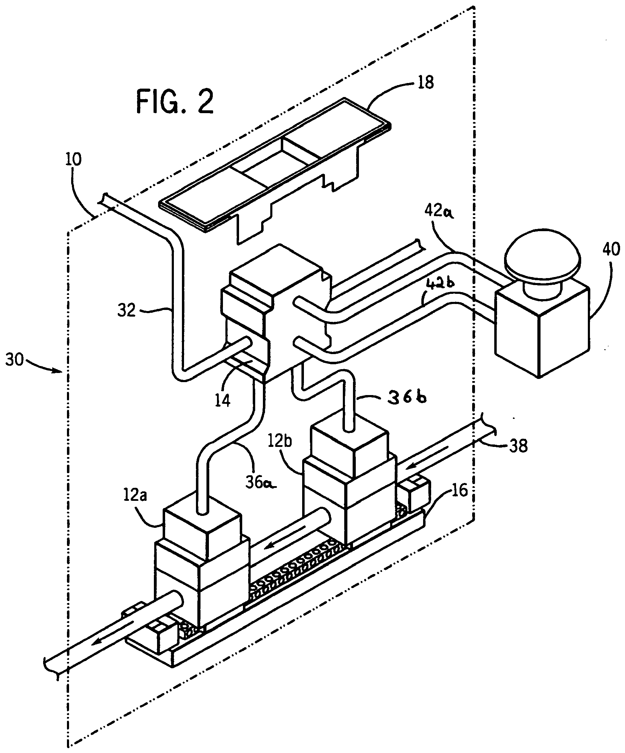

The integrated safety starter 10 also includes a safety relay 14. The safety relay 14 may be configured to monitor a condition, such as whether the contactors 12a and 12b are actually in their open position or in their closed position, as appropriate, and to "relay" that condition information elsewhere in an electrical system 30 (see FIG. 2). In a present embodiment, the safety relay 14 is a model commercially available from Rockwell Automation of Milwaukee, Wisconsin under the commercial designation Minotaur 138DP.

As illustrated in FIG. 1, the contactors 12a and 12b, and the safety relay 14 are mounted on a mounting rail 16. The mounting rail 16 may be any mounting rail suitable for mounting the contactors 12a and 12b and the safety relay 14. For example, the mounting rail 16 may be a DIN rail. In one embodiment, the mounting rail 16 is a 45 millimeter ("mm") DIN rail. In various embodiments, the mounting rail 16 may be configured to be attachable to an electrical assembly. For example, in one embodiment, the mounting rail 16 may be configured to snap or be screwed or bolted into a motor control center ("MCC"). In addition, the contactors 12a and 12b and the safety relay 14 are configured to snap onto the mounting rail 16 for ease of assembly and removal.

Moreover, the mounting rail 16 may also support one or more wires (not shown) and/or electrical connectors or terminal elements. For example, the mounting rail 16 may support connectors 17a and 17b that may be coupled to wires or traces that interconnect the connectors 17a and 17b to the contactors 12a and 12b and/or the safety relay 14. In one embodiment, the connector 17a is configured to be coupled to a power supply (i.e., the upstream side of an electrical enclosure) and the connector 17b is configured to be coupled to the load side (i.e., the downstream side of an electrical enclosure) with wires interconnecting the connectors 17a and 17b, the contactors 12a and 12b, and safety relay 14, as will be described in greater detail in regard to FIG. 2.

As illustrated in FIG. 1, the integrated safety starter 10 also includes a protective plate 18 that serves at least partially to enhance the integration of the components into a quality-controlled assembly. In the illustrated embodiment, the protective plate 18 are coupled to the contactors 12a and 12b, the safety relay 14, or both. The protective plate 18 is designed to block or discourage access to the wires (not shown) interconnecting the contactors 12a and 12b the safety relay 14, and the connectors 17a and 17b. In one embodiment, the protective plate 18 may be a face plate that blocks contact with the wires from the front of the integrated safety starter 10. Moreover, as illustrated in FIG. 1, the protective plate 18 may also include a cut-out region to enable a user to observe lights or other indicators on the safety relay 14.

In addition to discouraging access to the interconnecting wires of the integrated safety starter 10, the protective plate 18 may also protect the contactors 12a and 12b, the safety relay 14, and the mounting rail 16 from physical damage, during shipment, mounting, or usage. The protective plate 18 may also provide a measure of tamper protection for the integrated safety starter 10. For example, in one embodiment, a seal or sticker may be placed between the protective plate 18 and the contactors 12a and 12b or the safety relay 14, such that removal of the protective plate 18 (i.e., tampering) would be evident by a broken seal. While the provision of such quality control on the integrated unit may be optional, those skilled in the art will readily recognize that such control greatly enhances the reliability of the unit, and reduces the need to field wire the various components. Such control has heretofore been unavailable for safety relays and their related components.

As described above, the protective plate 18, in combination with the contactors 12a and 12b, the safety relay 14, and the mounting rail 16, provides some measure of tamper protection. For this reason, unlike conventional safety starter systems, the integrated safety starter 10 can be operationally tested and certified, as a complete device by the manufacturer of the integrated safety starter 10 to ensure that contactors 12a and 12b, the safety relay 14, mounting rail 16, and the interconnecting wires are functioning properly. Once certified, the manufacturer (or a third party) can designate the integrated safety starter 10 as tested and/or certified using a sticker or seal, as described above. In this way, the manufacturer of the integrated safety starter 10 can produce safety starters with a higher overall quality level. In one embodiment, the manufacturer of the integrated safety starter 10 (or the manufacturer's representative) may certify that the integrated safety starter 10 meets a "safety integrity level" ("SIL"), such as SIL 3 or SIL 4. Because the integrated safety starter 10 can be manufactured and tested as a single component, the integrated safety starter 10 is more reliable than conventional safety starters that are assembled at the time of use and thus difficult to pre-certify.

As described above, the integrated safety starter 10 may be configured to facilitate the safe start-up of a motor or other suitable electrical component. Accordingly, FIG. 2 is a diagrammatical view of a system 30 employing the integrated safety starter 10, as illustrated in FIG. 1, in accordance with one embodiment. For simplicity, like reference numerals have been used to label those elements previously described in regard to FIG. 1. As illustrated, the safety relay 14 may be coupled to relay control wires 32, which may couple a power source and/or controller to the safety relay 14. The wires 32 may carry a 24 volt dc supply current to the safety relay 14 to enable the safety relay 14 to energize the contactors 12a and 12b. The wires 32 may also be employed to transmit signals between the safety relay 14 and a control system (not shown in FIG. 2). For example, a control system may transmit a signal via the wires 32 that directs the safety relay 14 to energize the contractors 12a and 12b. In one embodiment (not shown), the wires 32 may be coupled to one of the connectors on the mounting rail 16.

The safety relay 14 may be coupled to the contactors 12a and 12b via contactor control wires 36a and 36b. It will be appreciated that a single contactor control wire 36a and a single contractor control wire 36b are illustrated for illustrative purposes only. As such, in alternate embodiments, more than one contactor control wire 36a and 36b may run between the safety relay 14 and the contactors 12a and 12b. As described further below, the safety relay 14 may employ the contactor control wires 36a and 36b to energize the contactors 12a and 12b or to carry contactor status information between the contactors 12a and 12b and the safety relay 14 (in a manner similar to conventional auxiliary contacts). For example, the safety relay 14 may employ the wires 36a and 36b to determine whether the contactors 12a and 12b have become fused in either the open position or the closed position.

As described above, the contactors 12a and 12b are electrical devices that can be used to control the flow of the power by switching on or off in response to an energizing current. In the embodiment illustrated in FIG. 2, the contactors 12a and 12b are configured to control the flow of power through a load power path 38. The load power path 38 may comprise one or more wires, contacts, or connectors disposed from a power source (not shown) through the contactors 12a and 12b to a load (not shown). In one embodiment, the load power path 38 may travel from a 480 voltage source into the connector 17a, through the contactor 12b, through the contactor 12a, and out to a motor through the connector 17b on the mounting rail 16. While the load power path 38 is depicted in FIG. 2 as a single channel, it will be appreciated that any number of suitable wires may make up the load power path 38. For example, in a three phase 480 volt system, the load power path 38 may include three wires, one for each phase, as well as conductors for ground and neutral connections.

Returning now to the safety relay 14, the safety relay 14 may also be coupled to an emergency stop ("E-Stop") button 40 via E-Stop signal wires 42a and 42b. As will be described further below, the E-Stop button 40, also referred to as an emergency off ("EMO"), provides a mechanism for an operator to command the safety relay 14 to open the contactors 12a and 12b (i.e., to remove power to the load).

Turning next to the operation of the system 30 in accordance with one embodiment, the integrated safety starter 10 may be employed to verify operating conditions prior to and during the start-up and use of a motor or other piece of industrial equipment. The operation of the integrated system 10 may begin before power is applied to the load current path 38. As higher voltage levels (e.g., 480 volts) are generally subject to particular control, in accordance with applicable codes, it may be desirable to verify the operability of the contactors 12a and 12b prior to applying power to the contactors 12a and 12b. For example, during a motor start-up operation, the contactors 12a and 12b may both initially have an open position or state either by energizing a normally closed contactor or by not energizing a normally open contactor. This open position enables operators of the system 30 to power (i.e., switch on) the motor downstream by closing the contactors 12a and 12b. However, if one or both of the contactors 12a and 12b is fused in a closed (i.e., conducting) position, turning on the upstream power generator may transmit power to loads through the contactors without their being controlled by their respective control inputs.

To reduce the chances of developing such unwanted application power to the load, the safety relay 14 within the integrated safety starter 10 may be configured to verify that the contactors 12a and 12b have not become fused (i.e., are responsive to control inputs). In one embodiment, the contactors 12a and 12b may be configured such that when the contactor 12a or 12b is in the open position, a physical switch within the contactor 12a, 12b closes. As such, the safety relay 14 is able to determine whether one or both of the contactors 12a, 12b are fused by checking the continuity across that switch. In other words, if the switch is closed when the contactor 12a, 12b should be open, the contactor 12a, 12b is most likely fused. It will be appreciated that checking the continuity across a switch is merely one exemplary technique for identifying a malfunction (e.g., a fused contactor). As such, in alternate embodiments, different techniques may be used.

If the safety relay 14 determines that one or both of the contractors 12a and 12b are fused, it may indicate or communicate this condition to the operator of the system 30 or to an automatic control device, PLC, or other controller. In one embodiment, the safety relay 14 may also be configured to lock one of the contactors in the open position (12a, for example), if the other contactor (12b, for example), is fused. However, if both of the contactors 12a and 12b are functioning properly, the safety relay 14 may indicate or communicate this condition to an operator or control device that may subsequently apply power via the load current path 38. Once power has been applied to the load current path 38, the safety relay 14 may also facilitate use of that power. Specifically, when directed by an operator or controller, the safety relay 14 may energize or deenergize the contactors 12a, 12b, as appropriate, to close the contactors 12a and 12b to allow power to flow downstream to the load (e.g., a motor). Similarly, when directed by an operator or controller, the safety relay 14 may energize or deenergize the contactors 12a and 12b, as appropriate, to open the contactors 12a and 12b to stop the flow of power to the load.

The safety relay 14 may also energize or deenergize the contactors 12a and 12b for a variety of other reasons. For example, the safety relay 14 may energize or deenergize the contactors 12a and 12b, as appropriate to open the contactors 12a and 12b if the safety relay 14 receives an emergency stop signal from the E-Stop 40. Similarly, the safety relay 14 may energize or deenergize the contactors 12a and 12b to open the contactors 12a and 12b if the safety relay 14 identifies certain other conditions. For example, the safety relay 14 may open the contactors 12a and 12b if the safety relay 14 detects a power surge within the system 30.

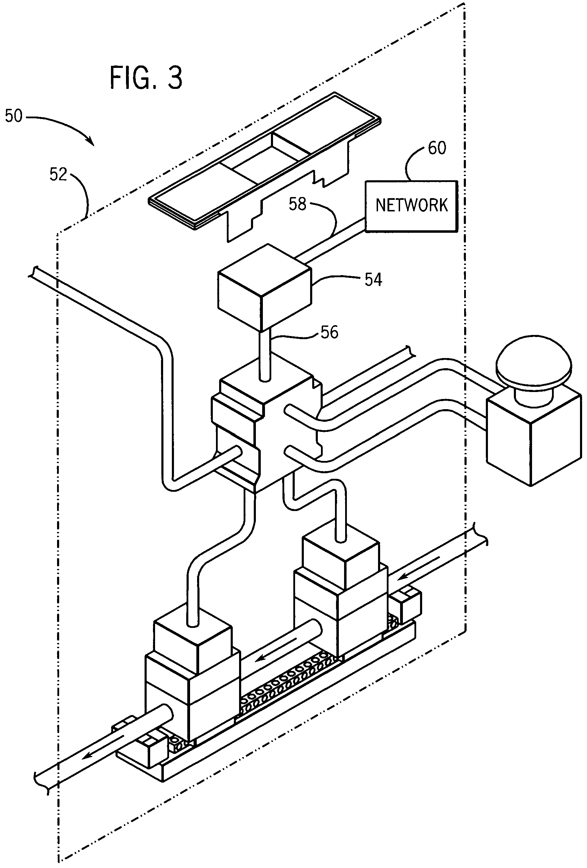

As described above, the integrated safety starter 10 may be employed to control the flow of electrical power within an electrical system. Many modern systems, however, are moving towards distributed input/output ("I/O") networked systems. These networked systems employ distributed I/O devices, such as programmable logic devices ("PLD") or programmable logic controllers ("PLC"), and computer networks, such as Ethernet or DeviceNet ("DNet") to communicate with and/or control components throughout an electrical system. Accordingly, FIG. 3 is a diagrammatical view of a system 50 employing a network capable integrated safety starter 52 in accordance with one embodiment. For simplicity, like reference numerals are used to indicate elements previously described in regard to FIGS. 1 and 2.

The network capable integrated safety starter 52 may include the contactors 12a and 12b, the safety relay 14, the mounting rail 16, and the protective plate 18, as described above. In addition, the network capable integrated safety starter 52 may include a network control module 54. In various embodiments, the network control module 54 may be a PLD, a PLC, a computer or computerized device, or other suitable logic device. The network control module 54 may be configured to receive digital instructions from a controller and to convert these digital signals, when appropriate, into control signals for the safety relay 14. Similarly, the network control module 54 may receive analog status information from the safety relay 14 and convert this status information, when appropriate, into digital information for the controller. In one embodiment, the network control module 54 may be configured to interface with the GuardLogic™ system commercially available from Rockwell Automation of Milwaukee, Wisconsin.

As illustrated in FIG. 3, the network control module 54 may be coupled to the safety relay 14 via a wire or multi-wire cable 56. Over this link, the network control module may issue commands to or receive information from the safety relay 14. For example, the network control module 54 may direct a safety relay 14 to energize or deenergize the contactors 12a and 12b based on the network control module internal programming or based on commands received from a controller elsewhere in the system 50. It should be noted that while the network control module and the safety relay 14 are depicted in FIG. 3 as separate components, in alternate embodiments, the network control module 54 and the safety relay 14 may be consolidated into a single component or assembly.

The network control module may be coupled to a network 60 over a network connection 58. As will be described further below, the network connection 58 may be any suitable form network connection such as Ethernet cable, fiber optics, and/or wireless transmission (e.g., IEEE 802.11 or WiMax, for example). Similarly, the network 60 may be any form of computer network suitable for interfacing with the network capable integrated safety starter 52. Examples of suitable networks include but are limited to, local area networks, wide area networks, Intranets, the Ethernet, and so forth.

Accordingly, FIG. 4 is a block diagram of a networked motor control system 70 employing the network capable integrated safety starter 52, as described in FIG. 3, in accordance with one embodiment. For simplicity, like reference numbers have been used to designate those features previously described in regard to previous figures. The motor control system 70 includes the network capable integrated safety starter 52, a power source 72, and a motor 74. As described above, the network cable integrated safety starter 52 may be configured to control the flow of power through the load power path 38 from the power generator 72 to the motor 74. Moreover, as shown, the network capable integrated safety starter 52 may be coupled to the network 60 via the network connection 58. The network 60 may then be connected to an I/O module 76

which is coupled to a controller 78. In one embodiment, the I/O module 76 and the controller 78 may be part of a GuardPLC™ 2000 system commercially available from Rockwell Automation of Milwaukee, Wisconsin. In alternate embodiments, different controllers 78 and/or I/O modules 76 may be employed.

The controller 78 may be coupled to a computer 80 to facilitate operator interaction with the controller 78. In various embodiments, the computer 80 may be either integrated into the same chassis as the controller 78 or mounted in a separated chassis that is coupled to the controller 78. As illustrated in FIG. 4, the computer 80 may also be coupled to a display, such as a computer monitor, and one or more human input devices 84, such as a keyboard and/or mouse.

In operation, an operator of the computer 80 (or a preprogrammed software routine) may control the start-up and operation of a motor or other electrical device using the system 70. For example, the computer 80 may direct the controller 78 to verify that the network capable integrated safety starter 52 is in the off position (i.e., both contactors in the open state). In response to this command, the controller 78 may communicate via the I/O module 78 and the network 60 to the network control module 54 within the network capable integrated safety starter 52. The network control module 54 may then confirm with the safety relay 14 that the contactors 12a and 12b are in their open states. This status information is then communicated back the computer 80 via the network 60. The computer 80 may then direct the power supply 72 to transmit power to the network capable integrated safety starter 52 via the path 38. Once power is transmitted to the network capable integrated safety starter 52, the computer 80 may direct the network capable integrated safety starter 52 (via the network 60 and the safety 78) to close the contactors 12a and 12b so that power can be transmitted to the motor 74. Once the motor is up and running, the computer 80 may also be configured to command the network capable integrated safety starter 52 to open the contactors 12a and 12b, as appropriate, to facilitate maintenance or other reasons (e.g., in response to an E-Stop signal).

While only certain features of the invention have been illustrated and described herein, many modifications and changes will occur to those skilled in the art. It is, therefore, to be understood that the appended claims are intended to cover all such modifications and changes, as long as they fall under the scope of the claims. In summary of the invention a method and apparatus is disclosed for controlling the flow of electrical power.

## Claims

1. A integrated safety relay device (10, 52) comprising:
a mounting rail (16);
a first contactor (12a) and a second contactor (12b) mounted onto the mounting rail (16);
a safety relay (14) mounted on the mounting rail (16) and electrically coupled to the first contactor (12a) and to the second contactor (12b); and
a protective plate (18) mounted on the safety relay (14) and the first and second contactors (12a, 12b) for blocking access to electrical connections between the contactors (12a, 12b) and the safety relay (14),
wherein the first contactor (12a) and the second contactor (12b) are electrically connected in series and both the first and the second contactors (12a, 12b) are adapted to control load power flow by switching, and
wherein the first contactor (12a), the second contactor (12b) and the safety relay (14) are separate entities configured to snap onto the mounting rail (16), and said safety relay (14) is further mechanically coupled to the mounting rail (16) between the first contactor (12a) and the second contactor (125).

2. The device of claim 1, wherein the first contactor (12a) is wired as a normally open contactor and the second contactor (12b) is wired as a normally closed contactor.

3. The device of claim 1 or 2, wherein the mounting rail (16) comprises an electrical connector that is electrically coupled to the first contactor (12a).

4. The device of one of claims 1 to 3 comprising a network module (54) coupled to the safety relay (14) and configured to communicate with a controller (78).

5. The device of claim 4, wherein the network module (54) is configured to communicate with the controller (78) via an Ethernet network.

6. The device of claim 4, wherein the network module (54) is configured to communicate with the controller (78) via a wireless network.

7. The device of one of claims 1 to 6, comprising a quality control device secured to the protective plate (18) and to the safety relay (14) as an indication of integrity of the integrated safety relay.

8. The device of one of claims 1 to 7, comprising a quality control device secured to the protective plate and the first contactor (12a) as an indication of the integrity of the integrated safety relay.

9. A method of manufacturing an integrated safety relay device according to claim 1, comprising:
mechanically coupling a first contactor (12a) and a second contactor (12b) to a mounting rail (16);
mechanically coupling a safety relay (14) to the mounting rail (16) and electrically coupling the safety relay (14) to the first contactor (12a) and to the second contactor (12b); and
mounting a protective plate (18) on the safety relay (14), the first contactor (12a) and the second contactor (12b) for creating an integrated assembly and for blocking access to electrical connections between the contactor (12a, 12b) and the safety relay (14).

10. The method of manufacturing of claim 9, comprising testing a functionality of the electrical device, and securing a quality control device to the integrated assembly to indicate a safety integrity level certification.

11. The method of manufacturing of claim 9 or 10 comprising coupling a network module (54) to the safety relay (14).

12. The method of manufacturing of claim 11, wherein coupling the network module (54) comprises coupling a programming logic device to the safety relay (14) as an integral element of the integrated assembly.

## Patentansprüche

1. Integrierte Sicherheits-Relaisvorrichtung (10, 52), die umfasst:
eine Montageschiene (16);
einen ersten Kontaktgeber (12a) und einen zweiten Kontaktgeber (12b), die an der Montageschiene (16) montiert sind;
ein Sicherheitsrelais (14), das an der Montageschiene (16) montiert und elektrisch mit dem ersten Kontaktgeber (12a) sowie dem zweiten Kontaktgeber (12b) gekoppelt ist; und
eine schützende Platte (18), die an dem Sicherheitsrelais (14) sowie dem ersten und dem zweiten Kontaktgeber (12a, 12b) montiert ist, um Zugang zu elektrischen Verbindungen zwischen den Kontaktgebern (12a, 12b) und dem Sicherheitsrelais (14) zu sperren,
wobei der erste Kontaktgeber (12a) und der zweite Kontaktgeber die weiter elektrisch in Reihe verbunden sind und sowohl der erste als auch der zweite Kontaktgeber (12a, 12b) so eingerichtet sind, dass sie Laststrom-Fluss durch Schalten steuern, und
der erste Kontaktgeber (12a, der zweite Kontaktgeber (12b) und das Sicherheitsrelais (14) separate Einheiten sind, die so eingerichtet sind, dass sie an der Montageschiene (16) einrasten, und das Sicherheitsrelais (14) des Weiteren zwischen dem ersten Kontaktgeber (12a) und dem zweiten Kontaktgeber (12b) mechanisch mit der Montageschiene (16) gekoppelt ist.

2. Vorrichtung nach Anspruch 1, wobei der erste Kontaktgeber (12a) als ein normalerweise offener Kontaktgeber verdrahtet ist und der zweite Kontaktgeber (12b) als ein normalerweise geschlossener Kontaktgeber verdrahtet ist.

3. Vorrichtung nach Anspruch 1 oder 2, wobei die Montageschiene (16) einen elektrischen Verbinder umfasst, der elektrisch mit dem ersten Kontaktgeber (12a) gekoppelt ist.

4. Vorrichtung nach einem der Ansprüche 1 bis 3, die ein Netzwerk-Modul (54) umfasst, das mit dem Sicherheitsrelais (14) gekoppelt und so eingerichtet ist, dass es mit einer Steuerung (78) kommuniziert.

5. Vorrichtung nach Anspruch 4, wobei das Netzwerk-Modul (54) so eingerichtet ist, dass es mit der Steuerung (78) über ein Ethernet-Netzwerk kommuniziert.

6. Vorrichtung nach Anspruch 4, wobei das Netzwerk-Modul (54) so eingerichtet ist, dass es mit der Steuerung (78) über ein Drahtlos-Netzwerk kommuniziert.

7. Vorrichtung nach einem der Ansprüche 1 bis 6, die eine Qualitätskontroll-Vorrichtung umfasst, die an der schützenden Platte (18) und an dem Sicherheitsrelais (14) als ein Hinweis auf Integrität des integrierten Sicherheitsrelais befestigt ist.

8. Vorrichtung nach einem der Ansprüche 1 bis 7, die eine Qualitätskontroll-Vorrichtung umfasst, die an der schützenden Platte und dem ersten Kontaktgeber (12a) als ein Hinweis auf Integrität des integrierten Sicherheitsrelais befestigt ist.

9. Verfahren zum Herstellen einer integrierten Sicherheitsrelais-Vorrichtung nach Anspruch 1, das umfasst:
mechanisches Koppeln eines ersten Kontaktgebers (12a) und eines zweiten Kontaktgebers (12b) mit einer Montageschiene (16);
mechanisches Koppeln eines Sicherheitsrelais (14) mit der Montageschiene (16) und elektrisches Koppeln des Sicherheitsrelais (14) mit dem ersten Kontaktgeber (12a) sowie dem zweiten Kontaktgeber (12b); sowie
Montieren einer schützenden Platte (18) an dem Sicherheitsrelais (14), dem ersten Kontaktgeber (12a) und dem zweiten Kontaktgeber (12b), um eine integrierte Anordnung zu schaffen und Zugang zu elektrischen Verbindungen zwischen den Kontaktgebern (12a, 12b) und dem Sicherheitsrelais (14) zu sperren,

10. Verfahren zum Herstellen nach Anspruch 9, das Testen einer Funktionalität der elektrischen Vorrichtung und Befestigen einer Qualitätskontroll-Vorrichtung an der integrierten Anordnung zum Anzeigen einer Bestätigung einer Sicherheits-Integritätsstufe umfasst.

11. Verfahren zum Herstellen nach Anspruch 9 oder 10, das Koppeln eines Netzwerk-Moduls (54) mit dem Sicherheitsrelais (14) umfasst.

12. Verfahren zum Herstellen nach Anspruch 11, wobei Koppeln des Netzwerk-Moduls (54) Koppeln einer Programmierlogik-Vorrichtung mit dem Sicherheitsrelais (14) als ein integrales Element der integrierten Anordnung umfasst

## Revendications

1. Dispositif de relais de sécurité intégré (10, 52) comprenant :
un rail de montage (16) ;
un premier contacteur (12a) et un deuxième contacteur (12b) montés sur le rail de montage (16) ;
un relais de sécurité (14) monté sur le rail de montage (16) et couplé électriquement au premier contacteur (12a) et au deuxième contacteur (12b) ; et
une plaque de protection (18) montée sur le relais de sécurité (14) et sur les premier et deuxième contacteurs (12a, 12b) pour bloquer l'accès aux connexions électriques entre les contacteurs (12a, 12b) et le relais de sécurité (14),
dans lequel le premier contacteur (12a) et le deuxième contacteur (12b) sont connectés électriquement en série et les premier et deuxième contacteurs (12a, 12b) sont tous deux adaptés pour contrôler le courant de charge par commutation, et
dans lequel le premier contacteur (12a), le deuxième contacteur (12b) et le relais de sécurité (14) sont des entités séparées configurées pour se clipser sur le rail de montage (16), et ledit relais de sécurité (14) est en outre couplé mécaniquement au rail de montage (16) entre le premier contacteur (12a) et le deuxième contacteur (125).

2. Dispositif selon la revendication 1, dans lequel le premier contacteur (12a) est câblé comme un contacteur normalement ouvert et le deuxième contacteur (12b) est câblé comme un contacteur normalement fermé.

3. Dispositif selon la revendication 1 ou 2, dans lequel le rail de montage (16) comprend un connecteur électrique qui est couplé électriquement au premier contacteur (12a).

4. Dispositif selon l'une des revendications 1 à 3, comprenant un module de réseau (54) couplé au relais de sécurité (14) et configuré pour communiquer avec un contrôleur (78).

5. Dispositif selon la revendication 4, dans lequel le module de réseau (54) est configuré communiquer avec le contrôleur (78) via un réseau Ethernet.

6. Dispositif selon la revendication 4, dans lequel le module de réseau (54) est configuré pour communiquer avec le contrôleur (78) via un réseau sans fil.

7. Dispositif selon l'une des revendications 1 à 6, comprenant un dispositif de contrôle de qualité fixé à la plaque de protection (18) et au relais de sécurité (14) comme indication de l'intégrité du relais de sécurité intégré.

8. Dispositif selon l'une des revendications 1 à 7, comprenant un dispositif de contrôle de qualité fixé à la plaque de protection et au premier contacteur (12a) comme indication de l'intégrité du relais de sécurité intégré.

9. Procédé de fabrication d'un dispositif de relais de sécurité intégré selon la revendication 1 comprenant :
le couplage mécanique d'un premier contacteur (12a) et d'un deuxième contacteur (12b) à un rail de montage (16) ;
le couplage mécanique d'un relais de sécurité (14) au rail de montage (16) et le couplage électrique du relais de sécurité (14) au premier contacteur (12a) et au deuxième contacteur (12b) ; et
le montage d'une plaque de protection (18) sur le relais de sécurité (14), le premier contacteur (12a) et le deuxième contacteur (12b) pour créer un ensemble intégré et pour bloquer l'accès aux connexions électriques entre les contacteurs (12a, 12b) et le relais de sécurité (14).

10. Procédé de fabrication selon la revendication 9, comprenant le test d'une fonctionnalité du dispositif électrique, et fixant un dispositif de contrôle de qualité à l'ensemble intégré pour indiquer une certification de niveau d'intégrité de sécurité.

11. Procédé de fabrication selon la revendication 9 ou 10, comprenant le couplage d'un module de réseau (54) au relais de sécurité (14).

12. Procédé de fabrication selon la revendication 11, dans lequel le couplage du module de réseau (54) comprend le couplage d'un dispositif logique de programmation au relais de sécurité (14) comme élément intégral de l'ensemble intégré.
